# FASCICULE DE BREVET EUROPEEN

(11) **EP 2 361 165 B1**
(45) Date de publication et mention de la délivrance du brevet: **28.11.2012**
(21) Numéro de dépôt: 08800479.1
(22) Date de dépôt: 15.10.2008
(51) Int. Cl.: B23B 13/12

(54) **CANON DE GUIDAGE FLEXIBLE POUR MACHINE-OUTIL**
FLEXIBLE EINSPANNVORRICHTUNGSBUCHSE FÜR WERKZEUGMASCHINE
FLEXIBLE JIG BUSHING FOR MACHINE TOOL

(43) Date de publication de la demande: 31.08.2011
(73) Titulaire: Dünner, Daniel, 2740 Moutier (CH)
(72) Inventeur: Dünner, Daniel, 2740 Moutier (CH)
(74) Mandataire: AMMANN PATENTANWÄLTE AG BERN
(86) Numéro de dépôt international: PCT/CH2008/000433
(87) Numéro de publication internationale: WO 2010/043058

(56) Documents cités:
- CH-A5- 574 302
- FR-A- 2 817 181
- US-A- 2 346 706

## Description

La présente invention porte sur un canon de guidage flexible pour machine-outil selon le préambule de la revendication 1.

Ce type de canon est conçu et mis en oeuvre pour le guidage de tiges ou barres à usiner dont le diamètre se situe essentiellement dans un intervalle allant de l'ordre de 1 mm à environ une quarantaine de mm, sur un tour automatique à poupée mobile. Il convient donc de le différencier des pinces de serrage, même si, exceptionnellement, il n'est pas impossible de l'utiliser pour une telle application.

Si l'utilisation de canons de guidage rigides conventionnels demeure encore courante de nos jours, elle n'est pas sans poser de problèmes. L'un d'eux est celui du réglage de la force d'application exercée par le canon sur la barre. En effet, la qualité de guidage de celle-ci est déterminante pour la qualité de l'usinage, puisqu'une force d'application trop grande engendrera un serrage trop important qui lui-même provoquera un grippage de la barre, et qu'à l'inverse, une force insuffisante laissera flotter la barre, ce qui conduira à un usinage d'autant plus imprécis que les vitesses de rotation des barres à usiner sont élevées. Directement lié à ce problème s'ajoute celui des défauts de parallélisme des secteurs ou segments de guidage par rapport à l'axe de rotation, sur toute leur longueur. Un autre problème procède du fait que le diamètre nominal d'une barre n'est généralement pas parfaitement uniforme sur toute sa longueur et qu'en outre, la plage d'utilisation d'un canon usuel donné est de l'ordre de + 0.01 mm à - 0.03 mm. Le risque de marquage des pièces usinées est d'autant plus grand que le diamètre de la barre est petit.

C'est pour remédier à ces problèmes qu'ont été conçus les canons de guidage flexibles.

Est actuellement offert sur le marché un canon de guidage flexible comprenant de manière connue trois secteurs, en tant que tels autonomes et reliés entre eux par des éléments élastiques exerçant des forces antagonistes. D'une part, des ressorts circulaires extérieurs visent à maintenir lesdits secteurs sous l'effet de forces radiales orientées vers l'axe du canon. D'autre part, des ressorts de compression intérieurs dont l'axe est orthogonal à l'axe du canon, donc disposés tangentiellement, s'appuient dans des logements correspondants, ont pour fonction de leur imprimer un écartement voulu sur toute leur longueur. L'ensemble forme un corps pour partie cylindrique et pour partie tronconique. Après une mise en oeuvre de courte durée déjà, une fatigue des ressorts notamment intérieurs engendre des défauts de positionnement des secteurs les uns par rapport aux autres, ces défauts étant amplifiés à raison des chocs pouvant survenir lors des chargements de nouvelles barres. De plus, des copeaux d'usinage peuvent passer au travers des fentes et entravent un fonctionnement correct des ressorts de compression. C'est dire qu'un usinage précis s'avère rapidement impossible, tandis que la durée de vie de ces canons de guidage est des plus brèves.

Un autre canon de guidage flexible connu comporte trois segments réunis entre eux pour former un corps pour partie cylindrique, pour partie tronconique, un canon défini pouvant être mis en oeuvre pour le traitement de barres dont le diamètre se situe dans un intervalle donné. Les segments sont réunis au moyen de caoutchouc vulcanisé dans des espaces et fentes radiaux. On peut relever que la stabilité de ce canon est tout autre qu'idéale, à raison d'une diminution des surfaces d'appui des éléments de liaison en caoutchouc avec l'augmentation du diamètre des barres et d'une répartition non uniforme des forces d'appui sur celles-ci, plus précisément d'une absence de force dans la zone médiane de la barre, celle-ci n'étant tenue qu'aux extrémités, causes qui vont s'aggravant du fait d'une détérioration prématurée desdits éléments de liaison, observée lors du déplacement axial d'une barre en cours d'usinage et causée par des copeaux qui peuvent rester à l'intérieur du canon. L'instabilité de ce canon lors de l'usinage résulte de sa conception même, mais surtout, elle va croissante dans le temps, préjudiciant toujours plus gravement la qualité de l'usinage.

On observe que FR-A-2 817 181, US-A-2, 346, 706 et CH-A5-574 302 ne parviennent pas à pallier tout ou partie des inconvénients précite.

Le but de la présente invention est de réaliser un canon de guidage flexible pour l'usinage de barres sur une machine-outil, notamment un tour automatique, assurant à la fois un appui radial adéquat, uniforme et fiable sur la barre - condition *sine qua* non pour exécuter un usinage de qualité optimale de ladite barre - et palliant concomitamment les autres inconvénients dont sont affectés les canons de ce type commentés.

Ce but est atteint grâce aux moyens définis dans la revendication indépendante 1, les revendications dépendantes proposant des réalisations préférées et à bon compte de l'invention.

Les nombreux avantages, avérés lors de multiples essais effectués sous toutes conditions et distinguant le canon de guidage selon l'invention de ceux de l'art antérieur seront aisément compris après la description détaillée d'un exemple non limitatif d'une forme d'exécution de ce canon de guidage, faite à l'appui du dessin annexé dans lequel:
la figure 1 est une vue en perspective du canon de guidage, la figure 2 en est une coupe axiale selon la ligne II-II de la figure 3,
la figure 3 une vue de côté du canon de guidage et
la figure 4 est vue en perspective à plus grande échelle de deux segments adjacents, sans élément de liaison.

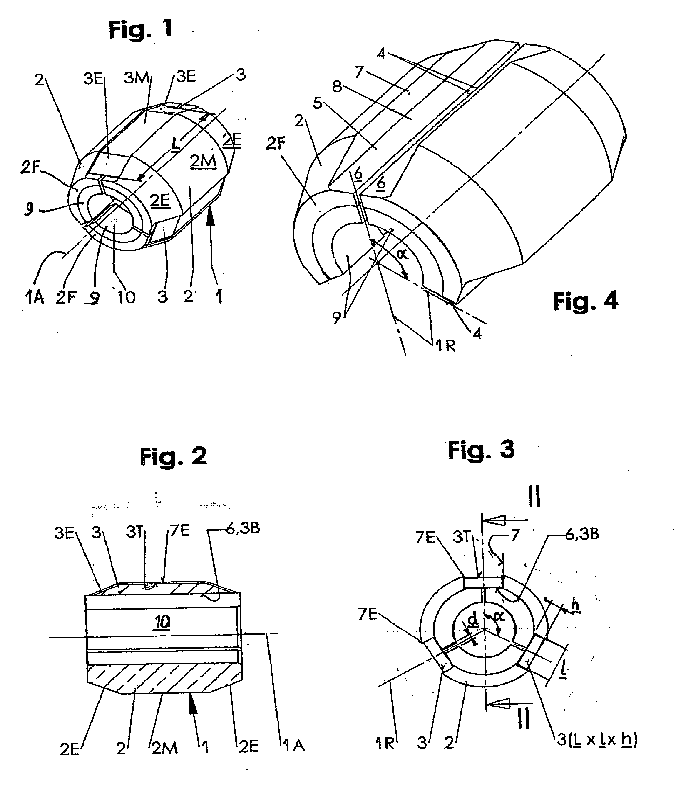

Dans les figures, les éléments identiques entre eux que comporte le canon de guidage portent une même référence. Ce canon 1 se présente sous une forme générale tubulaire, d'ouverture centrale 10 et d'axe 1A, résultant de la liaison entre eux d'au moins deux segments 2 identiques, de préférence de trois segments 2 (cf. figure 3, où l'angle α, selon cet exemple, est par conséquent égal à 120°), ces segments s'étendant axialement, donc parallèlement à l'axe 1A, et présentant deux flancs 4 conformés de sorte à permettre la liaison précitée (cf. infra). Le profil de l'enveloppe extérieure d'un segment est telle qu'une ligne génératrice (non illustrée) engendre, lors de sa rotation autour de l'axe 1A, une surface cylindrique sur une partie intermédiaire 2M et, de part et d'autre, sur des parties terminales 2E, à l'instar des canons de ce type et de façon connue, une surface tronconique adaptée à celles, d'une part, d'un piston mobile d'un mandrin (ces éléments n'étant pas représentés), dont l'actionnement permet le serrage et l'ouverture du canon et, d'autre part, d'une calotte fixe de fermeture (également non représentée), étant précisé que le terme tubulaire mentionné plus haut n'est pas à entendre au sens strict, la partie intermédiaire 2M ne devant pas être nécessairement ou uniquement cylindrique, eu égard à d'éventuelles contraintes de construction à respecter.

La figure 4 montre en détail deux segments 2 adjacents. Chacun des plans respectifs (non référencés) des flancs longitudinaux 4 d'un segment 2 est parallèle à un axe radial 1R. Chaque flanc 4 comporte, d'une part, un méplat 6 dont le plan (non référencé) est orthogonal à cet axe 1R et, d'autre part, un épaulement 7 présentant une arête extérieure 7E, dont le plan (non référencé) est parallèle à ce même axe 1R, donc perpendiculaire au méplat 6. Ces faces 6, 7 constituent ainsi un dégagement 5 en forme de lettre majuscule L orientée, l'une, dans un sens, l'autre, dans le sens opposé.

Les éléments de liaison sont constitués de languettes 3 en matériau élastique ayant, selon l'exemple représenté, une forme d'obélisque ou de parallélépipède aux dimensions définies L x l x h (cf. figures 1 et 3). De part et d'autre d'une partie intermédiaire 3M en forme de parallélépipède droit s'étendent des parties terminales 3E en forme de prisme droit dont les faces supérieures (non référencées) sont biseautées. La longueur L de la surface rectangulaire de base 3B est égale (ou au moins approximativement égale) à la longueur du canon (on choisira de préférence pour cette dernière, une valeur égale à au moins une trentaine de mm).

A l'état assemblé, les dégagements 5 de deux éléments 2 se faisant face forment un logement 8 en forme de rainure longitudinale qui s'étend parallèlement à l'axe 1A et dans laquelle une languette 3 est agencée et fixée, avantageusement par vulcanisation, collage ou casting. La rainure 8, et par conséquent les flancs 4, les méplats 6 et les épaulements 7 sont dimensionnés de sorte que, en fonction de la largeur l de la languette 3, les deux flancs 4 soient maintenus à une distance d également définie l'un de l'autre, ladite largeur l étant elle-même déterminée en fonction de la force de serrage et des caractéristiques du matériau élastique utilisé. Selon une variante non représentée, la section de la languette peut présenter, sur toute sa longueur, une protubérance s'étendant dans l'écart d, cela, bien entendu, sur une distance limitée de sorte que cette protubérance n'entre pas en conflit avec le diamètre de l'alésage 10. Les faces visibles 3T des trois languettes 3 épousent approximativement l'enveloppe (non spécifiquement référencée) du canon, un léger retrait par rapport à celle-ci, visible aux figures 2 et 3 étant prévu, la face supérieure 3T de chaque languette 3 s'étendant légèrement en deçà des arêtes 7E des épaulements 7 pratiqués dans chaque segment 2.

On conçoit que l'opération de serrage du canon en vue du blocage d'une barre à usiner dans l'ouverture 10 engendre une déformation élastique de chaque languette 3. D'une part, l'écart d se réduira à une valeur d', la valeur initiale d étant calculée de sorte qu'à l'état serré, d' reste supérieure à zéro. La différence entre d et d' sera minime en présence d'une protubérance (cf. supra), tandis qu'elle peut être plus prononcée lorsque la face inférieure 3B de la languette est (comme représentée dans les figures 1, 2 et 3) plane. D'autre part, les faces biseautées des parties 3E, qui correspondent à la partie tronconique 2E que forment les segments 2, viennent épouser au moins partiellement la forme du cône du piston de serrage et de la calotte de fermeture. De manière analogue, les faces 3T des parties intermédiaires 3M peuvent se bomber légèrement, de sorte que les retraits par rapport à l'enveloppe du canon (voir plus haut) dans la zone médiane des languettes se réduisent, le retrait final de chaque languette 3 pouvant s'approcher de la valeur zéro. C'est dire que le retrait initial des languettes 3 est défini de sorte que lors de la déformation élastique, lesdites zones médianes des faces 3T, par définition les plus élevées lors du serrage, ne dépassent pas l'enveloppe extérieure du canon 1, qu'en tout cas, elles n'entrent pas en conflit avec des éléments environnants du mandrin.

Aussi bien une introduction de copeaux et autres corps étrangers à l'intérieur du canon que leur dépôt sur les parties tronconiques 2E lors de l'ouverture et de la fermeture du canon sont empêchés, ce qui assure une excellente qualité du travail, étant donné que tous corps étrangers, s'ils pouvaient rester prisonniers entre les surfaces tronconiques 2E et les faces d'appui correspondantes du piston mobile et de la calotte de fermeture, engendreraient une perte de précision des opérations d'usinage.

De manière générale, chaque segment 2 est solidaire d'un segment 2 voisin tout en alliant de façon idéale rigidité et souplesse lors de l'exercice, sous l'action du piston de serrage, des forces de résistance et d'action à la fermeture et à l'ouverture du canon. Les caractéristiques de construction du canon de guidage flexible (dimensionnement des logements 8 et des languettes 3, choix du matériau élastique de ces languettes) sont déterminées en fonction des contraintes à respecter exposées plus haut.

De manière connue, un canon donné, parmi toute une gamme, sera utilisé pour l'usinage de barres d'un diamètre défini et compris dans une plage également donnée (par exemple, plages de 0.2 mm, 0.3 mm ou 0.5 mm selon le diamètre de la barre.

Les segments du canon selon l'invention peuvent être élaborés en matériau métallique (par exemple en acier trempé, fonte, bronze) ou synthétique. Surtout, il est possible de rapporter sur chaque segment, par exemple par brasage, une chemise 9 en métal dur (représentée aux figures 1 et 4). Ce chemisage peut s'étendre sur tout ou partie de la longueur de chacun des segments 2, par exemple sur une distance à partir de leurs faces frontales 2F, comme on peut l'apercevoir aux figures 1 et 2. Ainsi, les segments du canon peuvent être fabriqués avec un matériau métallique usuel ou synthétique et comporter une chemise en matériau dur plus sophistiqué, tel que le carbure de tungstène ou la céramique.

La nouvelle conception des liaisons par des moyens 3 des segments 2 entre eux, liaisons axiales et non pas radiales pouvant en outre être effectuée sur la longueur totale du canon, procure un grand nombre d'avantages regroupés sous les dix points suivants:
(1) stabilité parfaite du canon lors de sa mise en oeuvre grâce à
   - une répartition uniforme et constance des forces en présence, plus particulièrement, d'une part, des forces entre les segments de serrage et, d'autre part, des forces d'appui, c'est-à-dire de serrage, sur les barres à usiner, cela, en dépit de variations de diamètres des barres brutes à usiner et
   - une répartition uniforme et constante de la rigidité assurant un alignement et un parallélisme parfaits des segments sur toute la longueur du canon;
(2) parfaite régularité d'usinage, grâce à la possibilité d'effectuer un pré-usinage sur la matière en la diminuant de 0.2 à 0.3 mm, puis de reculer la matière à l'intérieur du canon, celui-ci s'adaptant automatiquement au nouveau diamètre, si bien que pour la deuxième opération de tournage, les défauts matière sont quasiment éliminés;
(3) pénétration de copeaux à l'intérieur du canon et de dépôt de copeaux sur les parties terminales coniques empêchée;
(4) possibilité d'usinage des barres présentant de grandes irrégularités de diamètre, avec, pour corollaire, le fait qu'un dégagement du milieu du canon s'avère inutile;
(5) flexibilité de serrage tout en maintenant les positions des segments.
(6) fiabilité de la stabilité sur une longue période, à raison, d'une part, de l'absence d'éléments pouvant s'altérer mécaniquement et, d'autre part, de la réduction du coefficient de frottement, grâce aux répartitions uniformes des forces et des frottements sur toute la longueur du canon;
(7) usure minima;
(8) possibilité de travailler tous métaux, y compris des métaux mous, certains titanes, des graphites et des matières synthétiques;
(9) encombrement réduit;
(10) conformation générale simple et réduction des coûts de fabrication à un minimum.

## Revendications

1. Canon de guidage (1) pour machine-outil, notamment pour tour automatique, comportant au moins deux segments (2) présentant chacun deux portions terminales tronconiques (2E), chaque segment étant relié à un segment voisin par un moyen élastique (3) pour former un corps de révolution d'axe (1A) d'enveloppe donnée et présentant une ouverture centrale (10) permettant le passage d'une barre cylindrique à usiner, chacun des moyens élastiques (3) s'étendant axialement selon l'axe (1A) dans un logement (8) du canon de guidage, **caractérisé en ce que** le moyen élastique (3) est en forme de languette présentant une face visible (3T) et comportant une partie intermédiaire (3M) de part et d'autre de laquelle s'étendent des parties terminales (3E) biseautées correspondant respectivement à une partie intermédiaire (2M) de part et d'autre de laquelle s'étendent les parties terminales tronconiques (2E) de deux segments (2) adjacents que la languette (3) relie, et que la surface visible (3T) de cette languette est en léger retrait par rapport à des arêtes (7E) d'un dégagement (5) que présente chaque segment (2), le logement (8) résultant de l'agencement face à face des dégagements (5) de deux segments (2) voisins, afin d'épouser, à l'état fermé du canon (1), au moins approximativement et partiellement, mais sans la dépasser, l'enveloppe du canon, de sorte à procurer au canon stabilité et rigidité.

2. Canon de guidage selon la revendication 1, **caractérisé en ce que** chaque segment (2) présente deux flancs longitudinaux (4), chacun des flancs (4) comportant un méplat (6) et un épaulement (7) pour former le dégagement (5).

3. Canon de guidage selon la revendication 1 ou 2, **caractérisé en ce que** chaque languette (3) a une longueur L correspondant au moins approximativement à la longueur totale du canon (1).

4. Canon de guidage selon la revendication 3 **caractérisé en ce que** la languette (3) a une largeur définie l, de sorte à ménager, à l'état assemblé des segments (2) entre eux, une distance définie d entre deux flancs (4) se faisant face.

5. Canon de guidage selon la revendication 3 ou 4, **caractérisé en ce que** la languette (3) a une hauteur définie h, de sorte à ne pas dépasser l'enveloppe extérieure dudit canon à l'état assemblé des segments (2).

6. Canon de guidage selon l'une quelconque des revendications 1 à 5, **caractérisé en ce que** les segments (2) peuvent être en matériau métallique ou synthétique.

7. Canon de guidage selon l'une quelconque des revendications 1 à 5, **caractérisé en ce que** les segments (2) peuvent être pourvus d'une chemise (9) s'étendant sur tout ou partie de leur longueur.

8. Canon de guidage selon la revendication 7, **caractérisé en ce que** les chemises (9) sont en matériau dur, tel le tungstène ou la céramique.

9. Canon de guidage selon l'une quelconque des revendications 1 à 8, **caractérisé en ce que** l'enveloppe du canon, sur la partie intermédiaire (2M) entre les parties tronconiques (2E), est de forme cylindrique.

## Claims

1. Guide bushing (1) for a machine tool, particularly for an automatic lathe, comprising at least two segments (2) each having two frustoconical end portions (2E), each segment being connected to a neighbouring segment by an elastic means (3) to form a body of revolution having a given envelope axis (1A) and with a central opening (10) that allows the passage of a cylindrical bar to be machined, each of the elastic means (3) extending axially according to the axis (1A) in a seat (8) of the guide bushing, **characterized in that** the elastic means (3) is in the form of a tongue having a visible surface (3T) and comprising an intermediate portion (3M) on both sides of which chamfered end portions (3E) extend which respectively correspond to an intermediate portion (2M) on both sides of which the frustoconical end portions (2E) of two adjacent segments (2) extend which the tongue (3) connects, and **in that** the visible surface (3T) of this tongue is slightly set back from edges (7E) of a cutout (5) of each segment (2), the seat (8) resulting from the facing arrangement of the cutouts (5) of two neighbouring segments (2), so as to be at least approximately and partly flush, in the closed condition of the bushing (1), with the envelope of the bushing without however projecting therefrom, so as to impart the bushing stability and rigidity.

2. Guide bushing according to claim 1, **characterised in that** each segment (2) has two longitudinal flanks (4), each of the flanks (4) having a flat (6) and a shoulder (7) to form the cutout (5).

3. Guide bushing according to claim 1 or 2, **characterised in that** each tongue (3) has a length L that corresponds at least approximately to the total length of the bushing (1).

4. Guide bushing according to claim 3, **characterised in that** the tongue (3) has a defined width l such that a defined distance d between two facing flanks (4) results in the mutually assembled condition of the segments (2).

5. Guide bushing according to claim 3 or 4, **characterised in that** the tongue (3) has a defined height h such that it does not project from the outer envelope of the bushing in the assembled condition of the segments (2).

6. Guide bushing according to any one of claims 1 to 5, **characterised in that** the segments (2) may be made of metallic or synthetic material.

7. Guide bushing according to any one of claims 1 to 5, **characterised in that** the segments (2) may be provided with a jacket (9) extending on part or on the entire length thereof.

8. Guide bushing according to claim 7, **characterised in that** the jackets (9) are made of a hard material such as tungsten or ceramics.

9. Guide bushing according to any one of claims 1 to 8, **characterised in that** the envelope of the bushing is cylindrical in the intermediate portion (2M) between the frustoconical portions (2E).

## Patentansprüche

1. Führungsbuchse (1) für eine Werkzeugmaschine, insbesondere eine automatische Drehmaschine, mit mindestens zwei Segmenten (2), die jeweils zwei kegelstumpfförmige Endpartien (2E) aufweisen, wobei jedes Segment durch ein elastisches Mittel (3) mit einem benachbarten Segment verbunden ist, um einen Rotationskörper mit einer gegebenen Mantelachse (1A) zu bilden, der eine zentrale Öffnung (10) zur Aufnahme einer zu bearbeitenden zylindrischen Stange aufweist, wobei sich die elastischen Mittel (3) jeweils axial in der Achse (1A) in einer Aufnahme (8) der Führungsbuchse erstrecken, **dadurch gekennzeichnet, dass** das elastische Mittel (3) als Feder ausgebildet ist, die eine sichtbare Fläche (3T) aufweist und einen Mittelteil (3M) mit beidseitig anschliessenden abgeschrägten Endteilen (3E), die jeweils einem Mittelteil (2M) mit beidseitig anschliessenden kegelstumpfförmigen Endteilen (2E) zweier benachbarter Segmente (2) entsprechen, die die Feder (3) miteinander verbindet, und dass die sichtbare Fläche (3T) der Feder gegenüber den Kanten (7E) einer Ausnehmung (5) jedes Segments (2) leicht zurückgesetzt ist, wobei die Aufnahme (8) aus der gegenüberliegenden Anordnung der Ausnehmungen (5) zweier benachbarter Segmente (2) resultiert, damit sie sich im geschlossenen Zustand der Buchse (1) zumindest annähernd und teilweise an die Mantelfläche der Buchse anpasst, ohne jedoch über dieselbe hervorzustehen, um der Buchse Stabilität und Steifigkeit zu verleihen.

2. Führungsbuchse nach Anspruch 1, **dadurch gekennzeichnet, dass** jedes Segment (2) zwei Längsflanken (4) aufweist, wobei die Flanken (4) jeweils eine Abflachung (6) und einen Absatz (7) aufweisen, um die Ausnehmung (5) zu bilden.

3. Führungsbuchse nach Anspruch 1 oder 2, **dadurch gekennzeichnet, dass** die Federn (3) jeweils eine Länge L aufweisen, die mindestens annähernd der Gesamtlänge der Buchse (1) entspricht.

4. Führungsbuchse nach Anspruch 3, **dadurch gekennzeichnet, dass** die Feder (3) eine definierte Breite l aufweist derart, dass sich im zusammengefügten Zustand der Segmente (2) ein definierter Abstand d zwischen zwei einander gegenüberliegenden Flanken (4) ergibt.

5. Führungsbuchse nach Anspruch 3 oder 4, **dadurch gekennzeichnet, dass** die Feder (3) eine definierte Höhe h aufweist derart, dass sie im zusammengefügten Zustand der Segmente (2) nicht über die äussere Mantelfläche der Buchse hervorsteht.

6. Führungsbuchse nach einem der Ansprüche 1 bis 5, **dadurch gekennzeichnet, dass** die Segmente (2) aus Metall oder Kunststoff bestehen können.

7. Führungsbuchse nach einem der Ansprüche 1 bis 5, **dadurch gekennzeichnet, dass** die Segmente (2) mit einem Mantel (9) ausgestattet sein können, der sich über ihre ganze Länge oder einen Teil davon erstreckt.

8. Führungsbuchse nach Anspruch 7, **dadurch gekennzeichnet, dass** der Mantel (9) aus einem Hartstoff wie Wolfram oder Keramik besteht.

9. Führungsbuchse nach einem der Ansprüche 1 bis 8, **dadurch gekennzeichnet, dass** die Mantelfläche der Buchse im Mittelteil (2M) zwischen den kegelstumpfförmigen Teilen (2E) zylindrisch ist.
